(19)

**Europäisches Patentamt**
**European Patent Office**
**Office européen des brevets**

(11) **EP 4 122 970 A1**

(12) **EUROPEAN PATENT APPLICATION**

(43) Date of publication:
**25.01.2023 Bulletin 2023/04**

(21) Application number: **22186256.8**

(22) Date of filing: **21.07.2022**

(51) International Patent Classification (IPC):
**C08G 63/183** (2006.01)    **C08G 63/78** (2006.01)
**C08G 63/88** (2006.01)    **C08J 5/18** (2006.01)

(52) Cooperative Patent Classification (CPC):
**C08J 5/18; C08G 63/183; C08G 63/88;**
C08J 2367/02

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.07.2021   TW 110126992**

(71) Applicant: **Far Eastern New Century Corporation**
**Taipei (TW)**

(72) Inventors:
• **LIU, Hsin-Yu**
  **10602 Taipei City (TW)**
• **CHANG, Li-Ling**
  **10602 Taipei City (TW)**
• **LEU, Yow-An**
  **10602 Taipei City (TW)**

(74) Representative: **Brevalex**
**Tour Trinity**
**1 Bis Esplanade de La Défense**
**CS 60347**
**92035 Paris La Défense Cedex (FR)**

(54) **HEAT-SHRINKABLE POLYESTER FILM AND PRODUCTION METHOD THEREOF**

(57)    A heat-shrinkable polyester film includes at least one polyester material made of at least one polyester forming composition which includes a dibasic carboxylic mixture and a diol mixture. The heat-shrinkable polyester film has a heat shrinkage rate of not lower than 25% in a shrinkage direction, which is measured by immersing the heat-shrinkable polyester film in hot water at 65°C for 10 seconds. A method for producing the heat-shrinkable polyester film is also disclosed.

EP 4 122 970 A1

**Description**

The present disclosure relates to a heat-shrinkable polyester film and a method of producing the same.

A label made of a heat-shrinkable polyester film is usually attached to the outer surface of a commercial container (such as a high-density polyethylene (HDPE) bottle) to make the container recognizable and allow consumers to know the information about the contents of the container. The label-attaching method is mainly as follows: the heat-shrinkable polyester film is sleeved on a container, and the heat-shrinkable polyester film is then allowed to shrink and be firmly attached to the container in a hot environment, followed by conducting a cooling treatment.

Recently, heat-shrinkable polyester films have received increased interest in both academic research and industrial development. For instance, US 9574047 B2 discloses a heat-shrinkable polyester film having a heat shrinkage initiation temperature of 60°C or lower, a glass transition temperature (Tg) of 77°C or lower, and a heat shrinkage rate of 2% or more at 60°C. The heat-shrinkable polyester film is prepared by random-copolymerization of one kind of a dibasic acid component with three kinds of diol components. The dibasic acid component is one of terephthalic acid and dimethyl terephthalate. The diol components include 60 mol% to 90 mol% of ethylene glycol, 5 mol% to 30 mol% of one of neopentyl glycol and cyclohexanedimethanol, and 1 mol% to 20 mol% of a linear diol component having three or more carbon atoms at a main chain thereof. The linear diol component may be selected from the group consisting of diethylene glycol, 1,3-propanediol, 1,4-butanediol, and 1,5-pentanediol. The heat-shrinkable polyester film has good labeling performances, and hence can be used as a label for a HDPE container. However, a chain hydrocarbon dicarboxylic acid compound is not used to prepare the heat-shrinkable polyester film, such that the heat-shrinkable polyester film has poor shrinkage ability after aging, which is likely to cause the problem of insufficient heat shrinkage after aging and lead to loosening.

US 5070180 A discloses a shrinkable copolyester film including a copolyester which is formed by a polycondensation reaction of an acid component and a diol component. The acid component includes 50 mol% to 99 mol% of terephthalic acid, 1 mol% to 25 mol% of an aliphatic dicarboxylic acid, and 0 mol% to 30 mol% of an aromatic dicarboxylic acid, based on the total mole of the acid component. The diol component includes 70 mol% to 100 mol% of ethylene glycol and 0 mol% to 30 mol% of a diol selected from the group consisting of neopentyl glycol, propylene glycol, 1,4-butanediol, trimethylene glycol, tetramethylene glycol, hexamethylene glycol, diethylene glycol, polyalkylene glycol, and 1,4-cyclohexane dimethanol, based on the total mole of the diol component. The shrinkable copolyester film has a heat shrinkage rate of not less than 30% at 100°C and a Tg ranging from 35°C to 65°C. The shrinkable copolyester film has good shrinkage properties, i.e., being substantially free from wrinkles, distortion of film, and uneven shrinkage, and hence can be used as a shrinkable label for a polyethylene terephthalate (PET) bottle.

JP 3829353 B2 discloses a heat-shrinkable polyester film including a polyester which is formed by a polycondensation reaction of a dicarboxylic acid component, a diol component, and other components. The dicarboxylic acid component includes not lower than 70 mol% of terephthalic acid, and the diol component includes not lower than 70 mol% of ethylene glycol. The other components include at least one of adipic acid, isophthalic acid, butanediol, and neopentyl glycol. The heat-shrinkable polyester film has a maximum shrinkage stress of 0.5 kg/mm$^2$ to 1.2 kg/mm$^2$, a heat shrinkage rate of not greater than 40% in hot water at 75°C for 10 seconds, and a heat shrinkage rate of not lower than 50% in hot water at 95°C for 10 seconds. Although the heat-shrinkable polyester film has good shrinkage properties (i.e., uniform shrinkage, and unlikelihood of producing wrinkles or shrinkage spots) and impact resistance against breakage, JP 3829353 B2 does not disclose that the heat-shrinkable polyester film has a heat shrinkage rate of not lower than 25% in a shrinkage direction, which is measured by immersing the heat-shrinkable polyester film in hot water at 65°C for 10 seconds, and there is no solution to the problem of loosening after aging.

CN 112679709 A discloses a polyester which includes 3 wt% to 8 wt% of a dicarboxylic acid, 5 wt% to 15 wt% of an aliphatic diol, 0.001 wt% to 0.003 wt% of a hydrophilic modifier, 0.0001 wt% to 0.0005 wt% of a heat stabilizer, and the balance being a mixture of terephthalic acid or a derivative thereof and ethylene glycol (the molar ratio of which is 1:1.0-2.5). Although the heat-shrinkable polyester film made of the polyester has a high shrinkage rate, high heat resistance, and an antistatic property, CN 112679709 A does not disclose the shrinkage ability of the heat shrinkable film after aging, nor does it disclose how to solve the problem of loosening after aging.

The heat-shrinkable polyester films disclosed in the abovementioned patent documents can effectively shrink and be firmly attached to the container, and will not cause wrinkles or defects in the appearance of the container due to the shrinkage of the film. However, commercial containers are usually not sold or used immediately after production, and must meet the requirements of safe storage for a given period of time. Therefore, how to avoid the deterioration of heat-shrinkable performances of the heat-shrinkable polyester film due to aging after long-term storage is an important issue. Currently, only composite films (such as polyethylene terephthalate (PET)/oriented polystyrene (OPS)/PET) or non-polyester shrink films have the characteristic of not loosening after aging, but these films have the problem of poor recyclability.

US 10336871 B2 discloses a heat-shrinkable polyester film including a polyester resin which is formed by a polycondensation reaction of an acid component and a diol component. The acid component includes terephthalic acid and 1 mol% to 25 mol% of ε-caprolactone, and the diol component includes ethylene glycol and 1 mol% to 25 mol% of butanediol. The heat-shrinkable polyester film has a heat shrinkage rate in the width direction of not less than 30% and not more than 55% when the heat-shrinkable polyester film is aged in an atmosphere of 30°C and 85% RH (relative humidity) for 672 hours, and then the aged film is dipped in hot water of 70°C for 10 seconds. The heat-shrinkable polyester film still has shrinkage ability after aging, and will not have poor heat shrinkage after aging and loosen. However, a chain hydrocarbon dicarboxylic acid compound is not used to prepare the heat-shrinkable polyester film.

TW 202110970 A discloses a heat-shrinkable polyester film made of a polyester resin which contains a polyhydric alcohol component. In the heat-shrinkable polyester, ethylene terephthalate is used as the main component, and diethylene glycol (DEG) is present in an amount ranging from 6 mol% to 25 mol%, based on the total mole of the polyhydric alcohol component. The tensile elongation at break in the direction perpendicular to the main shrinkage direction after the film is allowed to stand for 28 days in an atmosphere of 40°C and 85% RH is not less than 20%. The heat-shrinkable polyester film has a high heat shrinkage rate in the main shrinkage direction and a low shrinkage stress after aging, and in which a decrease in tensile elongation at break with time is unlikely to occur. However, a chain hydrocarbon dicarboxylic acid compound is not used to prepare the heat-shrinkable polyester film.

In spite of the aforesaid, there is still a need to provide a heat-shrinkable film which has satisfactory shrinkage performances and processability after a long storage time (i.e., a time period of more than one month).

Therefore, in a first aspect, the present disclosure provides a heat-shrinkable polyester film, which can alleviate at least one of the drawbacks of the prior art, and which will not loosen due to aging after a long storage time.

The heat-shrinkable polyester film includes at least one polyester material made of at least one polyester forming composition which includes a dibasic carboxylic mixture and a diol mixture. The heat-shrinkable polyester film has a heat shrinkage rate of not lower than 25% in a shrinkage direction, which is measured by immersing the heat-shrinkable polyester film in hot water at 65°C for 10 seconds.

The dibasic carboxylic mixture includes a dibasic carboxylic compound and a chain hydrocarbon dicarboxylic acid compound. The dibasic carboxylic compound is selected from the group consisting of terephthalic acid and dimethyl terephthalate, and the chain hydrocarbon dicarboxylic acid compound is present in an amount ranging from 0.1 mol% to 8 mol%, based on the total molar amount of the dibasic carboxylic mixture.

The diol mixture includes ethylene glycol and a diol component which has at least one of a chain hydrocarbon group and a chain hydrocarbon oxy group (e.g. a chain alkoxy group) and is free from ethylene glycol. The diol component is present in an amount not lower than 15 mol%, based on the total molar amount of the diol mixture.

In a second aspect, the present disclosure provides a method for producing a heat-shrinkable polyester film, which can alleviate at least one of the drawbacks of the prior art. The method includes:

(a) providing a polyester material made of a polyester forming composition including a dibasic carboxylic mixture and a diol mixture,

wherein the dibasic carboxylic mixture includes a dibasic carboxylic compound and a chain hydrocarbon dicarboxylic acid compound, the dibasic carboxylic compound being selected from the group consisting of terephthalic acid and dimethyl terephthalate, and the chain hydrocarbon dicarboxylic acid compound being present in an amount ranging from 0.1 mol% to 8 mol%, based on the total molar amount of the dibasic carboxylic mixture; and wherein the diol mixture includes ethylene glycol and a diol component which has at least one of a chain hydrocarbon group and a chain hydrocarbon oxy group, the diol component being present in an amount not lower than 15 mol%, based on the total molar amount of the diol mixture;

(b) subjecting the polyester material to drying, a melting treatment, and an extruding treatment in sequence, so as to obtain a sheet; and
(c) subjecting the sheet to a preheating treatment, a stretching treatment, and an annealing treatment in sequence, so as to obtain the heat-shrinkable polyester film, the annealing treatment being conduted at a glass transition temperature of the sheet -15°C to the glass transition temperature of the sheet +8°C.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless defined otherwise, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a heat-shrinkable polyester film including at least one polyester material made of at least one polyester forming composition which includes a dibasic carboxylic (-COO-) mixture and a diol mixture. The heat-shrinkable polyester film has a heat shrinkage rate of not lower than 25% in a shrinkage direction, which is measured by immersing the heat-shrinkable polyester film in hot water at 65°C for 10 seconds.

According to the present disclosure, the dibasic carboxylic mixture includes a dibasic carboxylic compound and a chain hydrocarbon dicarboxylic acid compound. The dibasic carboxylic compound is selected from the group consisting of terephthalic acid and dimethyl terephthalate, and the chain hydrocarbon dicarboxylic acid compound is present in an amount ranging from 0.1 mol% to 8 mol%, based on the total molar amount of the dibasic carboxylic mixture.

According to the present disclosure, the diol mixture includes ethylene glycol and a diol component which has at least one of a chain hydrocarbon group and a chain hydrocarbon oxy group and is free from ethylene glycol. The diol component is present in an amount not lower than 15 mol%, based on the total molar amount of the diol mixture.

In certain embodiments, the heat-shrinkable polyester film may have a thickness of 35 $\mu$m to 50 $\mu$m.

As used herein, the term "shrinkage direction" refers to a machine direction (MD) or a transverse direction (TD) (i.e., a direction transverse to the machine direction).

In certain embodiments, the heat-shrinkable polyester film may have a heat shrinkage rate of not lower than 40% in the shrinkage direction, which is measured by immersing the heat-shrinkable polyester film in hot water at 70°C to 100 °C for 10 seconds.

In certain embodiments, the heat-shrinkable polyester film may have a heat shrinkage rate of not lower than 68% in the shrinkage direction, which is measured by immersing the heat-shrinkable polyester film in hot water at 90°C to 100 °C for 10 seconds.

In certain embodiments, the heat-shrinkable polyester film may have an absolute value of difference between a heat shrinkage rate in the shrinkage direction before aging and a heat shrinkage rate in the shrinkage direction after the aging, which is not greater than 10%. The heat shrinkage rate in the shrinkage direction before aging is measured after immersing in hot water at 65°C for 10 seconds, and the heat shrinkage rate in the shrinkage direction after the aging is measured after placing at 30°C and a relative humidity of 85% for 3 months, followed by immersing in hot water at 65°C for 10 seconds.

In certain embodiments, the heat-shrinkable polyester film may have an elongation at break of not lower than 300% in the shrinkage direction determined before and after the aging.

In certain embodiments, the heat-shrinkable polyester film may have an elongation at break ranging from 300% to 600% in the shrinkage direction determined before and after the aging.

In certain embodiments, the chain hydrocarbon dicarboxylic acid compound may be selected from the group consisting of a linear hydrocarbon dicarboxylic acid compound, a branched hydrocarbon dicarboxylic acid compound, and a combination thereof.

In certain embodiments, the linear hydrocarbon dicarboxylic acid compound may be selected from the group consisting of succinic acid, adipic acid, azelaic acid, and combinations thereof.

In certain embodiments, the chain hydrocarbon dicarboxylic acid compound may be present in an amount greater than 1 mol% and lower than 5 mol%, based on the total molar amount of the dibasic carboxylic mixture.

According to the present disclosure, the diol component having at least one of a chain hydrocarbon group and a chain hydrocarbon oxy group may include at least one diol having a chain hydrocarbon group or a chain hydrocarbon oxy group. The least one diol having a chain hydrocarbon group or a chain hydrocarbon oxy group may be a diol having a linear hydrocarbon group or a linear hydrocarbon oxy group, or a branched alkyl diol.

In certain embodiments, the diol component having at least one of a chain hydrocarbon group and a chain hydrocarbon oxy group may include a branched alkyl diol having a main chain with a number of carbon atoms not greater than 5 and at least one branched chain with a number of carbon atoms not greater than 4.

In certain embodiments, the branched alkyl diol may be present in an amount not lower than 15 mol%, based on the total molar amount of the diol mixture.

In certain embodiments, the branched alkyl diol may be selected from the group consisting of neopentyl glycol, 2-methyl-1,3-propanediol, 2-butyl-2-ethyl-1,3-propanediol, 2,2-diethyl-1,3-propanediol, 2-methyl-2-propyl-1,3-propanediol, 2,2-di-n-butyl-1,3-propanediol, 2-methyl-1,4-butanediol, 3-methyl-1,5-pentanediol, 2,4-diethyl-1,5-pentanediol, and combinations thereof.

In certain embodiments, the branched alkyl diol may be selected from the group consisting of neopentyl glycol, 2-methyl-1,3-propanediol, 2-butyl-2-ethyl-1,3-propanediol, and combinations thereof.

In certain embodiments, the branched alkyl diol may be present in an amount ranging from 15 mol% to 25 mol%, based on the total molar amount of the diol mixture.

In certain embodiments, the diol component having at least one of a chain hydrocarbon group and a chain hydrocarbon oxy group may further include a diol having a linear hydrocarbon group or a linear hydrocarbon oxy group. In certain embodiments, the diol having a linear hydrocarbon group or a linear hydrocarbon oxy group may be selected from the group consisting of 1,3-propanediol, 1,4-butanediol, 1,5-pentanediol, 1,6-hexanediol, diethylene glycol, triethylene glycol, polyether polyol, and combinations thereof. In certain embodiments, the diol having a linear hydrocarbon group or a linear hydrocarbon oxy group may be present in an amount greater than 0 mol% and not greater than 15 mol%, based on the total molar amount of the diol mixture.

In certain embodiments, the polyester forming composition may further include a recycled ester component. The recycled ester component may be a component obtained from recycled beverage bottles (for example, a recycled polyethylene terephthalate (PET) component).

In certain embodiments, the heat-shrinkable polyester film may include two or more polyester materials, and one of the polyester materials may be made of a polyester forming composition including the recycled ester component.

According to the present disclosure, when the heat-shrinkable polyester film is used on a container that is not sensitive to temperature (such as a PET bottle) or a container that produces drastic changes in thermal expansion and contraction (such as a high-density polyethylene (HDPE) bottle), the heat-shrinkable polyester film will not loosen due to aging after a long storage time.

The present disclosure also provides a method for producing a heat-shrinkable polyester film, which includes:

(a) providing a polyester material made of a polyester forming composition including a dibasic carboxylic mixture and a diol mixture,

wherein the dibasic carboxylic mixture includes a dibasic carboxylic compound and a chain hydrocarbon dicarboxylic acid compound, the dibasic carboxylic compound being selected from the group consisting of terephthalic acid and dimethyl terephthalate, and the chain hydrocarbon dicarboxylic acid compound being present in an amount ranging from 0.1 mol% to 8 mol%, based on the total molar amount of the dibasic carboxylic mixture; and wherein the diol mixture includes ethylene glycol and a diol component which has at least one of a chain hydrocarbon group and a chain hydrocarbon oxy group, the diol component being present in an amount not lower than 15 mol%, based on the total molar amount of the diol mixture;

(b) subjecting the polyester material to drying, a melting treatment, and an extruding treatment in sequence, so as to obtain a sheet; and

(c) subjecting the sheet to a preheating treatment, a stretching treatment, and an annealing treatment in sequence, so as to obtain the heat-shrinkable polyester film, the annealing treatment being conduted at a glass transition temperature of the sheet -15°C to the glass transition temperature of the sheet +8°C.

According to the present disclosure, the thickness of the sheet in step (b) may be adjusted according to the type of object to be applied with polyester heat shrinkable film.

In certain embodiments, the sheet may have a thickness ranging from 160 $\mu$m to 250 $\mu$m.

In certain embodiments, the sheet may have a glass transition temperature ranging from 56°C to 77°C.

The chain hydrocarbon dicarboxylic acid compound and the diol component having at least one of a chain hydrocarbon group and a chain hydrocarbon oxy group used in step (a) are as described above.

In certain embodiments, in step (b), the melting treatment may be conducted at a temperature ranging from 210°C to 260°C.

According to the present disclosure, in step (c), the preheating treatment is intended to soften the sheet obtained in step (b), so that the stretching treatment can be carried out subsequently. The temperature of the preheating treatment may be adjusted according to the material of the sheet and the conditions of the stretching treatment.

In certain embodiments, the preheating treatment may be conduted at a glass transition temperature of the sheet -10°C to the glass transition temperature of the sheet +40°C. In certain embodiments, the preheating treatment may be conduted at a temperature ranging from 60°C to 100°C.

According to the present disclosure, in step (c), the stretching treatment is conducted by stretching the sheet in a direction (for example, a machine direction or a direction transverse to the machine direction).

In certain embodiments, in step (c), the stretching treatment is conducted by stretching the sheet in at least one direction at the glass transition temperature of the sheet to the glass transition temperature of the sheet +15°C.

In certain embodiments, in step (c), the stretching treatment is conducted by stretching the sheet at a stretch ratio of 2 to 7. In certain embodiments, in step (c), the stretching treatment is conducted by stretching the sheet at a stretch ratio of 4 to 6.

In certain embodiments, in step (c), the stretching treatment is conducted at a temperature ranging from 60°C to 100°C. In certain embodiments, in step (c), the stretching treatment is conducted at a temperature ranging from 70°C to 85°C.

The present disclosure will be further described by way of the following examples. However, it should be understood that the following examples are intended solely for the purpose of illustration and should not be construed as limiting the present disclosure in practice.

**Examples**

General Procedures:

1. Determination of intrinsic viscosity (IV)

The intrinsic viscosities of the polyester resins were determined according to ASTM D4603 (published in 2003). Briefly, $0.25 \pm 0.0025$ g of the polyester resins were mixed with 25 mL of a solvent containing 60 wt% of phenol and 40 wt% of 1,1,2,2-tetrachloroethane, so as to form a mixture. Next, the mixture was heated at $110 \pm 10°C$ for 1 hour, followed by cooling to obtain a test sample. The test sample was subjected to measurement at 25°C using an Ostwald viscometer, and the intrinsic viscosity was then calculated using the Huggins equation.

P1 polyester resins:

A dibasic carboxylic acid component containing 100 mol% of terephthalic acid, a diol component containing 80.0 mol% of ethylene glycol and 20.0 mol% of neopentyl glycol, and 300 ppm of tetraethylammonium hydroxide were mixed homogeneously to obtain a mixture. The mixture was heated to 250°C and then was subjected to an esterification reaction under a nitrogen atmosphere. When the amount of distilled water reached the theoretical value of the esterification reaction, 340 ppm of ethylene glycol antimony (serving as a catalyst) and 100 ppm of trimethyl phosphate (serving as a heat stabilizer) were added, and the resultant mixture was then subjected to a polymerization reaction at 275°C under a vacuum atmosphere, so as to obtain the P1 polyester resins. The P1 polyester resins were measured to have an intrinsic viscosity (IV) of 0.670 dL/g.

P2 to P11 polyester resins:

The P2 to P11 polyester resins were prepared using the components shown in Tables 1 to 2 and according to the procedures described for preparing the P1 polyester resins.

P12 polyester resins:

Polybutylene terephthalate (PBT) purchased from Chang Chun Group (Cat. No. 1200-211D) and having an IV of 0.750 dL/g was used as the P12 polyester resins.

P13 polyester resins:

Polybutylene adipate terephthalate (PBAT) purchased from BASF Co., Ltd., Taiwan (Cat. No. Ecoflex® F Blend C1200) and having an IV of 0.584 dL/g was used as the P13 polyester resins.

P14 polyester resins:

A recycled polyethylene terephthalate bottle was crushed, and the resultant flakes were melted and extruded at 280°C using an extruder, followed by granulation in a granulator, so as to obtain recycled ester resins having an IV of 0.605 dL/g.

Thereafter, 12000 g (30 wt%) of the recycled ester resins, 22669.99 g (136.5 mol) of terephthalic acid, 8277.12 g (133.35 mol) of ethylene glycol, and 5502.65 g (52.8 mol) of neopentyl glycol, and 300 ppm of tetraethylammonium hydroxide were mixed homogeneously to obtain a mixture. The mixture was heated to 250°C and then was subjected to an esterification reaction under a nitrogen atmosphere. When the amount of distilled water reached the theoretical value of the esterification reaction, 340 ppm of ethylene glycol antimony (serving as a catalyst) and 100 ppm of trimethyl phosphate (serving as a heat stabilizer) were added, and the resultant mixture was then subjected to a polymerization reaction at 275°C under a vacuum atmosphere, so as to obtain the P14 polyester resins. The P14 polyester resins were measured to have an IV of 0.680 dL/g.

P15 polyester resins:

A dibasic carboxylic acid component containing 96 mol% of terephthalic acid and 4 mol% of adipic acid, a diol component containing 80.0 mol% of ethylene glycol and 20.0 mol% of 2-methyl-1,3-propanediol, and 300 ppm of tetraethylammonium hydroxide were mixed homogeneously to obtain a mixture. The mixture was heated to 250°C and then was subjected to an esterification reaction under a nitrogen atmosphere. When the amount of distilled water reached the theoretical value of the esterification reaction, 340 ppm of ethylene glycol antimony (serving as a catalyst) and 100 ppm of trimethyl phosphate (serving as a heat stabilizer) were added, and the resultant mixture was then subjected to a polymerization reaction at 275°C under a vacuum atmosphere, so as to obtain the P15 polyester resins. The P15 polyester resins were measured to have an IV of 0.690 dL/g.

P16 polyester resins:

A poly(butylene terephthalate-co-ε-caprolactone) purchased from Toyobo Co., Ltd., Japan (Cat. No. PELPRENE™ S1002) and having an IV of 1.337 dL/g was used as the P16 polyester resins.

P17 polyester resins:

The P17 polyester resins were prepared using the recipe shown in Tables 1 to 2 and according to the procedures described for preparing the P1 polyester resins.

The components and intrinsic viscosities of the P1 to P17 polyester resins are summarized in Tables 1 to 2 below.

Table 1

| | Dibasic carboxylic ccid component | | | | | |
|---|---|---|---|---|---|---|
| | Terephthalic acid | Adipic acid | Succinic acid | Azelaic Acid | Isophthalic acid | 1,10-decanedic arboxylic acid |
| Polyester resins | Content (mol%) | | | | | |
| P1 | 100 | 0 | 0 | 0 | 0 | 0 |
| P2 | 96 | 4 | 0 | 0 | 0 | 0 |
| P3 | 96 | 0 | 4 | 0 | 0 | 0 |
| P4 | 96 | 0 | 0 | 4 | 0 | 0 |
| P5 | 96 | 0 | 0 | 0 | 4 | 0 |
| P6 | 100 | 0 | 0 | 0 | 0 | 0 |
| P7 | 100 | 0 | 0 | 0 | 0 | 0 |
| P8 | 98.5 | 1.5 | 0 | 0 | 0 | 0 |
| P9 | 98.5 | 1.5 | 0 | 0 | 0 | 0 |
| P10 | 90 | 10 | 0 | 0 | 0 | 0 |
| P11 | 73 | 27 | 0 | 0 | 0 | 0 |
| P12 | 100 | 0 | 0 | 0 | 0 | 0 |
| P13 | 50 | 50 | 0 | 0 | 0 | 0 |
| P14 | 100 | 0 | 0 | 0 | 0 | 0 |
| P15 | 96 | 4 | 0 | 0 | 0 | 0 |
| P16 | 100 | 0 | 0 | 0 | 0 | 0 |
| P17 | 86 | 0 | 0 | 0 | 0 | 14 |

Table 2

| Polyester resins | Diol component | | | | | | IV (dL/g) |
|---|---|---|---|---|---|---|---|
| | Ethylene glycol | Neopentyl glycol | 2-methyl-1,3-propanediol | 1,4-butanediol | Diethylene glycol | ε-caprolactone | |
| | Content (mol%) | | | | | | |
| P1 | 80 | 20 | 0 | 0 | 0 | 0 | 0.670 |
| P2 | 80 | 20 | 0 | 0 | 0 | 0 | 0.719 |
| P3 | 80 | 20 | 0 | 0 | 0 | 0 | 0.720 |
| P4 | 80 | 20 | 0 | 0 | 0 | 0 | 0.690 |
| P5 | 80 | 20 | 0 | 0 | 0 | 0 | 0.670 |
| P 6 | 80 | 15 | 0 | 0 | 5 | 0 | 0.690 |
| P7 | 75 | 20 | 0 | 0 | 5 | 0 | 0.694 |
| P8 | 80 | 15 | 0 | 0 | 5 | 0 | 0.690 |
| P9 | 75 | 20 | 0 | 0 | 5 | 0 | 0.699 |
| P10 | 80 | 20 | 0 | 0 | 0 | 0 | 0.670 |
| P11 | 100 | 0 | 0 | 0 | 0 | 0 | 0.706 |
| P12 | 0 | 0 | 0 | 100 | 0 | 0 | 0.750 |
| P13 | 0 | 0 | 0 | 100 | 0 | 0 | 0.584 |
| P14 | 76 | 24 | 0 | 0 | 0 | 0 | 0.680 |
| P15 | 80 | 0 | 20 | 0 | 0 | 0 | 0.690 |
| P16 | 0 | 0 | 0 | 55 | 0 | 45 | 1. 337 |
| P17 | 100 | 0 | 0 | 0 | 0 | 0 | 0.680 |

Example 1 (EX1):

The P2 polyester resins were dried until the moisture content was not greater than 200 ppm, so as to obtain dried P2 polyester resins. The dried P2 polyester resins were subjected to a melting treatment using a twin-screw extruder at 210°C to 260°C, and the resultant molten P2 polyester resins were then extruded from a T-die, followed by winding on a rotating metal roller having a surface temperature of 30°C for cooling, so as to obtain a sheet with a thickness of 190 μm.

The sheet was then processed through a stretching machine (Manufacturer: Brückner Karo IV) at a rate of 45 m/min at a preheating temperature of 100°C, followed by stretching in a transverse direction at a stretch ratio of 4.8 at 73°C, and finally annealing at 63°C, so as to obtain a heat-shrinkable polyester film of EX1 with a thickness of 40 μm.

Examples 2 to 13 (EX2 to EX13) and Comparative Examples 1 to 11 (CE1 to CE11):

The procedures for preparing the heat-shrinkable polyester films of EX2 to EX13 and CE1 to CE11 were similar to those of EX1, except that the types and weight percentages of the polyester resins, and the preheating temperature, the stretching temperature, and the annealing temperature were varied as shown in Tables 3 to 6 below.

Table 3

| Polyester resins | EX1 | EX2 | EX3 | EX4 | EX5 | EX6 |
|---|---|---|---|---|---|---|
| P1 (wt%) | 0 | 0 | 0 | 85 | 0 | 0 |
| P2 (wt%) | 100 | 0 | 0 | 0 | 0 | 0 |
| P3 (wt%) | 0 | 100 | 0 | 0 | 0 | 0 |

(continued)

| Polyester resins | EX1 | EX2 | EX3 | EX4 | EX5 | EX6 |
|---|---|---|---|---|---|---|
| P4 (wt%) | 0 | 0 | 100 | 0 | 0 | 0 |
| P5 (wt%) | 0 | 0 | 0 | 0 | 0 | 0 |
| P6 (wt%) | 0 | 0 | 0 | 0 | 0 | 0 |
| P7 (wt%) | 0 | 0 | 0 | 0 | 0 | 0 |
| P8 (wt%) | 0 | 0 | 0 | 0 | 100 | 0 |
| P9 (wt%) | 0 | 0 | 0 | 0 | 0 | 100 |
| P10 (wt%) | 0 | 0 | 0 | 0 | 0 | 0 |
| P11 (wt%) | 0 | 0 | 0 | 15 | 0 | 0 |
| P12 (wt%) | 0 | 0 | 0 | 0 | 0 | 0 |
| P13 (wt%) | 0 | 0 | 0 | 0 | 0 | 0 |
| P14 (wt%) | 0 | 0 | 0 | 0 | 0 | 0 |
| P15 (wt%) | 0 | 0 | 0 | 0 | 0 | 0 |
| Preheating temperature (°C) | 100 | 100 | 100 | 100 | 100 | 100 |
| Stretching temperature (°C) | 73 | 77 | 76 | 73 | 78 | 76 |
| Annealing temperature (°C) | 63 | 67 | 66 | 63 | 68 | 66 |

Table 4

| Polyester resins | EX7 | EX8 | EX9 | EX10 | EX11 | EX12 | EX13 |
|---|---|---|---|---|---|---|---|
| P1 (wt%) | 0 | 85 | 0 | 0 | 90 | 0 | 86 |
| P2 (wt%) | 0 | 0 | 0 | 91 | 0 | 0 | 0 |
| P3 (wt%) | 0 | 0 | 0 | 0 | 0 | 0 | 0 |
| P4 (wt%) | 0 | 0 | 0 | 0 | 0 | 0 | 0 |
| P5 (wt%) | 0 | 0 | 0 | 0 | 0 | 0 | 0 |
| P6 (wt%) | 0 | 0 | 0 | 0 | 0 | 0 | 0 |
| P7 (wt%) | 96 | 0 | 0 | 0 | 0 | 0 | 0 |
| P8 (wt%) | 0 | 0 | 0 | 0 | 0 | 0 | 0 |
| P9 (wt%) | 0 | 0 | 0 | 0 | 0 | 0 | 0 |
| P10 (wt%) | 0 | 0 | 0 | 0 | 0 | 0 | 0 |
| P11 (wt%) | 4 | 4 | 4 | 0 | 0 | 0 | 3 |
| P12 (wt%) | 0 | 11 | 11 | 9 | 0 | 0 | 11 |
| P13 (wt%) | 0 | 0 | 0 | 0 | 10 | 0 | 0 |
| P14 (wt%) | 0 | 0 | 85 | 0 | 0 | 0 | 0 |
| P15 (wt%) | 0 | 0 | 0 | 0 | 0 | 100 | 0 |
| Preheating temperature (°C) | 100 | 100 | 100 | 86 | 86 | 100 | 100 |
| Stretching temperature (°C) | 77 | 73 | 73 | 72 | 70 | 73 | 76 |
| Annealing temperature (°C) | 67 | 63 | 63 | 60 | 60 | 63 | 66 |

Table 5

| Polyester resins | CE1 | CE2 | CE3 | CE4 | CE5 | CE6 |
|---|---|---|---|---|---|---|
| P1 (wt%) | 100 | 0 | 0 | 0 | 0 | 91 |
| P2 (wt%) | 0 | 0 | 0 | 0 | 0 | 0 |
| P3 (wt%) | 0 | 0 | 0 | 0 | 0 | 0 |
| P4 (wt%) | 0 | 0 | 0 | 0 | 0 | 0 |
| P5 (wt%) | 0 | 100 | 0 | 0 | 0 | 0 |
| P6 (wt%) | 0 | 0 | 0 | 100 | 0 | 0 |
| P7 (wt%) | 0 | 0 | 0 | 0 | 100 | 0 |
| P8 (wt%) | 0 | 0 | 0 | 0 | 0 | 0 |
| P9 (wt%) | 0 | 0 | 0 | 0 | 0 | 0 |
| P10 (wt%) | 0 | 0 | 100 | 0 | 0 | 0 |
| P11 (wt%) | 0 | 0 | 0 | 0 | 0 | 0 |
| P12 (wt%) | 0 | 0 | 0 | 0 | 0 | 9 |
| P13 (wt%) | 0 | 0 | 0 | 0 | 0 | 0 |
| P14 (wt%) | 0 | 0 | 0 | 0 | 0 | 0 |
| P15 (wt%) | 0 | 0 | 0 | 0 | 0 | 0 |
| P16 (wt%) | 0 | 0 | 0 | 0 | 0 | 0 |
| P17 (wt%) | 0 | 0 | 0 | 0 | 0 | 0 |
| Preheating temperature (°C) | 98 | 98 | 86 | 100 | 100 | 92 |
| Stretching temperature (°C) | 83 | 83 | 72 | 82 | 80 | 77 |
| Annealing temperature (°C) | 76 | 76 | 60 | 70 | 70 | 70 |

Table 6

| Polyester resins | CE7 | CE8 | CE9 | CE10 | CE11 |
|---|---|---|---|---|---|
| P1 (wt%) | 75 | 0 | 85 | 92 | 0 |
| P2 (wt%) | 0 | 0 | 0 | 0 | 0 |
| P3 (wt%) | 0 | 0 | 0 | 0 | 0 |
| P4 (wt%) | 0 | 0 | 0 | 0 | 0 |
| P5 (wt%) | 0 | 91 | 0 | 0 | 0 |
| P6 (wt%) | 0 | 0 | 0 | 0 | 0 |
| P7 (wt%) | 0 | 0 | 0 | 0 | 0 |
| P8 (wt%) | 0 | 0 | 0 | 0 | 0 |
| P9 (wt%) | 0 | 0 | 0 | 0 | 0 |
| P10 (wt%) | 0 | 0 | 0 | 0 | 0 |
| P11 (wt%) | 0 | 0 | 4 | 0 | 0 |
| P12 (wt%) | 25 | 9 | 11 | 0 | 0 |
| P13 (wt%) | 0 | 0 | 0 | 0 | 0 |
| P14 (wt%) | 0 | 0 | 0 | 0 | 0 |

(continued)

| Polyester resins | CE7 | CE8 | CE9 | CE10 | CE11 |
|---|---|---|---|---|---|
| P15 (wt%) | 0 | 0 | 0 | 0 | 0 |
| P16 (wt%) | 0 | 0 | 0 | 8 | 0 |
| P17 (wt%) | 0 | 0 | 0 | 0 | 100 |
| Preheating temperature (°C) | 100 | 92 | 100 | 100 | 88 |
| Stretching temperature (°C) | 73 | 77 | 78 | 73 | 62 |
| Annealing temperature (°C) | 65 | 70 | 78 | 63 | 57 |

Property evaluation:

A. Glass transition temperature (Tg) analysis:

The sheet of the respective one of EX1 to EX13 and CE1 to CE11 was subjected to Tg analysis using a differential scanning calorimeter (DSC) (Manufacturer: TA Instruments, USA; Model: 2910 Modulated DSC). A test temperature was raised from - 50°C to 300°C at a heating rate of 10°C/minute. The results are shown in Tables 7 to 10.

B. $^1$H nuclear magnetic resonance ($^1$H-NMR) spectroscopy analysis:

The heat-shrinkable polyester film of the respective one of EX1 to EX13 and CE1 to CE11 was dissolved in a solution containing deuterated chloroform ($CDCl_3$) and trifluoroacetic acid (3:1, v/v), so as to obtain a test sample (10 mg/mL).
The molar ratios of the chain hydrocarbon dicarboxylic acid compound and the diol component having at least one of a chain hydrocarbon group and a chain hydrocarbon oxy group in the respective test sample were measured using a NMR spectrometer (Bruker, 400 MHz). The results are shown in Tables 7 to 10.

Table 7

| | | EX1 | EX2 | EX3 | EX4 | EX5 | EX6 |
|---|---|---|---|---|---|---|---|
| | | Content (mol%) | | | | | |
| Chain hydrocarbon dicarboxylic acid compound | Adipic acid | 4.1 | 0 | 0 | 4.1 | 1.4 | 1.3 |
| | Succinic acid | 0 | 3.8 | 0 | 0 | 0 | 0 |
| | Azelaic Acid | 0 | 0 | 3.7 | 0 | 0 | 0 |
| | Total molar amount | 4.1 | 3.8 | 3.7 | 4.1 | 1. 4 | 1.3 |
| Diol component having at least one of a chain hydrocarbon group and a chain hydrocarbon oxy group | Neopentyl glycol | 19.2 | 20.8 | 20.1 | 17.9 | 15.3 | 20.5 |
| | 2-methyl-1,3-propanediol | 0 | 0 | 0 | 0 | 0 | 0 |
| | 1,4-butanediol | 0 | 0 | 0 | 0 | 0 | 0 |
| | Diethylene glycol | 0 | 0 | 0 | 0 | 5.6 | 6.5 |
| | Total molar amount of branched alkyl diol | 19.2 | 20.8 | 20.1 | 17.9 | 15.3 | 20.5 |
| Tg of sheet (°C) | | 68 | 70 | 68 | 67 | 71 | 69 |

Table 8

| | | EX7 | EX8 | EX9 | EX10 | EX11 | EX12 | EX13 |
|---|---|---|---|---|---|---|---|---|
| | | Content (mol%) | | | | | | |
| Chain hydrocarbon dicarboxylic acid compound | Adipic acid | 1.2 | 1.3 | 1.2 | 3.9 | 5.8 | 3.8 | 0. 8 |
| | Succinic acid | 0 | 0 | 0 | 0 | 0 | 0 | 0 |
| | Azelaic Acid | 0 | 0 | 0 | 0 | 0 | 0 | 0 |
| | Total molar amount | 1.2 | 1.3 | 1.2 | 3.9 | 5.8 | 3.8 | 0. 8 |
| Diol component having at least one of a chain hydrocarbon group and a chain hydrocarbon oxy group | Neopentyl glycol | 19.4 | 18.1 | 20.1 | 16.3 | 19.1 | 0 | 18.3 |
| | 2-methyl-1,3-propanediol | 0 | 0 | 0 | 0 | 0 | 20.4 | 0 |
| | 1,4-butanediol | 0 | 10.6 | 10.4 | 8.5 | 10.1 | 0 | 10.4 |
| | Diethylene glycol | 6.3 | 0 | 0 | 0 | 0 | 0 | 0 |
| | Total molar amount of branched alkyl diol | 19.4 | 18.1 | 20.1 | 16.3 | 19.1 | 20.4 | 18.3 |
| Tg of sheet (°C) | | 70 | 66 | 66 | 62 | 59 | 65 | 68 |

Table 9

| | | CE1 | CE2 | CE3 | CE4 | CE5 | CE6 |
|---|---|---|---|---|---|---|---|
| | | Content (mol%) | | | | | |
| Dicarboxylic acid compound | Adipic acid | 0 | 0 | 9. 8 | 0 | 0 | 0 |
| | Succinic acid | 0 | 0 | 0 | 0 | 0 | 0 |
| | Azelaic Acid | 0 | 0 | 0 | 0 | 0 | 0 |
| | Isophthalic acid | 0 | 3.9 | 0 | 0 | 0 | 0 |
| | 1,10-decanedicarboxylic acid | 0 | 0 | 0 | 0 | 0 | 0 |
| | Total molar amount of chain hydrocarbon dicarboxylic acid compound | 0 | 0 | 9.8 | 0 | 0 | 0 |
| ε-caprolactone | | 0 | 0 | 0 | 0 | 0 | 0 |
| Diol component having at least one of a chain hydrocarbon group and a chain hydrocarbon oxy group | Neopentyl glycol | 20.5 | 19.7 | 20.8 | 15.2 | 19.8 | 19.4 |
| | 2-methyl-1,3-propanediol | 0 | 0 | 0 | 0 | 0 | 0 |
| | 1,4-butanediol | 0 | 0 | 0 | 0 | 0 | 8.2 |
| | Diethylene glycol | 0 | 0 | 0 | 5.3 | 6.7 | 0 |
| | Total molar amount of branched alkyl diol | 20.5 | 19.7 | 20.8 | 15.2 | 19.8 | 19.4 |
| Tg of sheet (°C) | | 76 | 75 | 60 | 75 | 73 | 70 |

Table 10

| | | | CE7 | CE8 | CE9 | CE10 | CE11 |
|---|---|---|---|---|---|---|---|
| | | | Content (mol%) | | | | |
| Dicarboxylic acid compound | | Adipic acid | 0 | 0 | 1.3 | 0 | 0 |
| | | Succinic acid | 0 | 0 | 0 | 0 | 0 |
| | | Azelaic Acid | 0 | 0 | 0 | 0 | 0 |
| | | Isophthalic acid | 0 | 3.5 | 0 | 0 | 0 |
| | | 1,10-decanedicarboxylic acid | 0 | 0 | 0 | 0 | 14 |
| | | Total molar amount of chain hydrocarbon dicarboxylic acid compound | 0 | 0 | 1.3 | 0 | 14 |
| ε-caprolactone | | | 0 | 0 | 0 | 3.8 | 0 |
| Diol component having at least one of a chain hydrocarbon group and a chain hydrocarbon oxy group | | Neopentyl glycol | 16.3 | 18.6 | 18.1 | 19.6 | 0 |
| | | 2-methyl-1,3-propanediol | 0 | 0 | 0 | 0 | 0 |
| | | 1,4-butanediol | 23 | 8.5 | 10.6 | 4.3 | 0 |
| | | Diethylene glycol | 0 | 0 | 0 | 0 | 0 |
| | | Total molar amount of branched alkyl diol | 16.3 | 18.6 | 18.1 | 19.6 | 0 |
| Tg of sheet (°C) | | | 65 | 69 | 66 | 62 | 50 |

C. Measurement of heat shrinkage rate:

The heat shrinkage rate of the heat-shrinkable polyester film was measured according to JIS Z1709. Briefly, the heat-shrinkable polyester film of the respective one of EX1 to EX13 and CE1 to CE11 was cut into a test sample having a dimension of 100 mm (in the machine direction) x 100 mm (in the transverse direction) (i.e., the test sample had an original length ($L_0$) of 100 mm in both the machine and transverse directions). Subsequently, the respective test sample was subjected to a heat treatment by immersing in hot water at a temperature (T°C) for 10 seconds, followed by cooling in cold water at 30°C for 30 seconds. A first length $L_{TD}$ (mm) of the test sample in the transverse direction (TD) was then recorded.

The heat shrinkage rate of the test sample in the transverse direction (T°C TD%) after heat treatment at T°C was calculated using the following Equation (I) :

$$T°C\ TD\%=[(L_0-L_{TD})/L_0]\times100\% \qquad\qquad (I)$$

where T°C=65°C, 70°C or 95°C.

The results are shown in Tables 11 to 14 below.

D. Measurement of heat shrinkage rate at 65°C after aging:

The heat-shrinkable polyester film of the respective one of EX1 to EX13 and CE1 to CE11 was subjected to an aging treatment in an environment of 30°C and a relative humidity of 85% for 3 months to form an aging film. Subsequently, the heat shrinkage rate of the resultant aging film after treatment in hot water at 65°C (aging 65°C TD%) was measured according to the procedures described in section C.

The absolute value of the difference between the heat shrinkage rates of the heat-shrinkable polyester film in the transverse direction before and after the aging was calculated using the following Equation (II):

$$65°C\Delta TD\%=|(aging\ 65°C\ TD\%)-(65°C\ TD\%)|\quad (II)$$

The results are shown in Tables 11 to 14 below.

E. Measurement of initial time of shrinkage and time of maximum shrinkage stress at 65°C:

The heat-shrinkable polyester film of the respective one of EX1 to EX13 and CE1 to CE11 was cut into a test sample having a dimension of 18 mm (in the machine direction) x 150 mm (in the transverse direction). A tension machine with a constant temperature water tank (JH-690, Jobho Co., Ltd.) was used for the measurement. Subsequently, two ends of the test sample in the transverse direction were fixed using a clamping tool of the tension machine, followed by placing the test sample in hot water at 65°C for 60 seconds at a speed of 800 mm/min from a distance of 200 mm from the constant temperature water tank, so as to obtain a shrinkage stress versus time curve. The time when the shrinkage stress was greater than 0.1 MPa (i.e., the initial time of shrinkage at 65°C) and the time of the maximum shrinkage stress were obtained from the curve. The results are shown in Tables 11 to 14 below.

F. Measurement of machine direction (MD) elongation at break before and after aging:

A MD elongation at break before and after aging regarding each of the heat-shrinkable polyester films was measured according to ASTM D882. Briefly, the heat-shrinkable polyester film of the respective one of EX1 to EX13 and CE1 to CE11 was cut into a test sample having a dimension of 150 mm (in the machine direction) x 15 mm (in the transverse direction) .

In addition, the heat-shrinkable polyester film of the respective one of EX1 to EX13 and CE1 to CE11 was subjected to an aging treatment in an environment of 30°C and a relative humidity of 85% for 3 months to form an aging film. The resultant aging film was cut into a test sample having a dimension of 150 mm (in the machine direction) x 15 mm (in the transverse direction).

The respective test sample was then subjected to a test using a material testing machine (QC-508B1, Cometech Testing Machines Co., Ltd.). In the test, the test sample was fixed by two clamps at both ends thereof in the machine direction (the distance between the clamps: 100 mm), and was then stretched until break. A distance (D) between the two clamps in the machine direction at break of the test sample was recorded, and the elongation in the machine direction at break was calculated using the following Equation (III):

$$\texttt{MD elongation (\%)=[(D-100)/100]×100\%} \qquad \texttt{(III)}$$

The results are shown in Tables 11 to 14 below.

G. Measurement of haze:

The heat-shrinkable polyester film of the respective one of EX1 to EX13 and CE1 to CE11 was subjected to haze measurement using a hazemeter (NDH-2000, NIPPON DENSHOKU Co., Ltd.) in accordance with ASTM D1003. The test was repeated for 5 times, and an average was calculated and presented in Tables 11 to 14.

H. Evaluation of appearance and looseness:

10 pieces of the heat-shrinkable polyester film of the respective one of EX1 to EX13 and CE1 to CE11 and 10 pieces of the aging film of the respective one of EX1 to EX13 and CE1 to CE11 described in section D were subjected to the following tests.

The respective film was cut into a label film having a dimension of 220 mm (in the machine direction) x 305 mm (in the transverse direction). The opposite ends of the respective label film in the machine direction were slightly melted using 1,3-dioxolane (serving as a solvent) to make the opposite ends sticky. The opposite ends of the label film were then connected together, so as to form a cylindrical label film. The cylindrical label film was sleeved on a high-density polyethylene (HDPE) container with a capacity of 1000 mL and a maximum circumference of 290 mm to form a test sample. Thereafter, the test sample was moved at a speed of 4 m/min through a hot air furnace with a temperature of 155°C to 170°C and a length of 2 meters, so that the temperature of the test sample reached 70°C to 75°C, and so that the cylindrical label film was firmly attached to the HDPE container. The test sample was left to stand at 20°C to 24°C for cooling for 1 day, and then the appearance and looseness of the cylindrical label film were evaluated.

The results are shown in Tables 11 to 14 below. As shown in Tables 11 to 14, for the appearance evaluation, the symbol "O" indicates that the cylindrical label film had no wrinkles or shrink whitening defects, the symbol "△" indicates that the cylindrical label film had short and shallow wrinkles and unobvious or slightly shrink whitening defects, and the symbol "X" indicates that the cylindrical label film had obvious and deep wrinkles or serious shrink whitening defects.

In addition, for the looseness evaluation: the symbol "O" indicates that when the cylindrical label film was rotated by hand, the cylindrical label film was not rotatable, and there was no gap between the cylindrical label film and the HDPE container, such that the cylindrical label film did not loosen; the symbol "△" indicates that when the cylindrical label film was rotated by hand, the cylindrical label film was not rotatable, but there was a slight gap between the cylindrical label film and the HDPE container, such that the cylindrical label film was slightly loose; and the symbol "X" indicates that when the cylindrical label film was rotated by hand, the cylindrical label film was rotatable, and there was an obvious gap between the cylindrical label film and the HDPE container, such that the cylindrical label film had a serious loosening problem.

Table 11

|  |  | EX1 | EX2 | EX3 | EX4 | EX5 | EX6 |
|---|---|---|---|---|---|---|---|
| 95°C TD% | | 78 | 76 | 77 | 76 | 76 | 77 |
| 70°C TD% | | 58 | 48 | 50 | 48 | 44 | 52 |
| 65°C TD% | Before aging | 40 | 33 | 36 | 35 | 29 | 34 |
| | After aging | 37 | 26 | 30 | 31 | 23 | 30 |
| 65°C△TD% | | 3 | 7 | 6 | 4 | 6 | 4 |
| Initial time of shrinkage at 65°C (sec) | | 5.9 | 7.3 | 12.5 | 4.8 | 5.7 | 7.2 |
| Time of maximum shrinkage stress at 65°C (sec) | | 11.3 | 19.8 | 19.9 | 12.3 | 17 | 15.6 |
| MD elongation at break (%) | Before aging | 444 | 322 | 356 | 331 | 488 | 510 |
| | After aging | 403 | 306 | 329 | 315 | 474 | 506 |
| Haze (%) | | 1.5 | 0.6 | 2.5 | 1.1 | 2.2 | 2.1 |
| Appearance evaluation | Before aging | ○ | ○ | ○ | ○ | ○ | ○ |
| | After aging | ○ | ○ | ○ | ○ | ○ | ○ |
| Looseness evaluation | Before aging | ○ | ○ | ○ | ○ | ○ | ○ |
| | After aging | ○ | △ | ○ | ○ | △ | ○ |

Table 12

|  |  | EX7 | EX8 | EX9 | EX10 | EX11 | EX12 | EX13 |
|---|---|---|---|---|---|---|---|---|
| 95°C TD% | | 77 | 78 | 78 | 70 | 69 | 76 | 75 |
| 70°C TD% | | 52 | 65 | 62 | 56 | 58 | 55 | 50 |
| 65°C TD% | Before aging | 35 | 45 | 44 | 50 | 50 | 38 | 32 |
| | After aging | 32 | 41 | 40 | 46 | 48 | 34 | 24 |
| 65°C△TD% | | 3 | 4 | 4 | 4 | 2 | 4 | 8 |
| Initial time of shrinkage at 65°C (sec) | | 6.1 | 5.4 | 4.8 | 6.3 | 6.2 | 5.4 | 8.9 |
| Time of maximum shrinkage stress at 65°C (sec) | | 16.2 | 9.8 | 9.1 | 12.6 | 13.8 | 12.4 | 15.3 |
| MD elongation at break (%) | Before aging After aging | 517 | 501 | 508 | 524 | 453 | 502 | 496 |
| | | 486 | 480 | 495 | 512 | 388 | 374 | 490 |
| Haze (%) | | 2.8 | 2.9 | 2.9 | 2.9 | 1.6 | 2.5 | 2.2 |
| Appearance evaluation | Before aging After aging | ○ | ○ | ○ | ○ | ○ | ○ | ○ |
| | | ○ | ○ | ○ | ○ | ○ | ○ | ○ |
| Looseness evaluation | Before aging After aging | ○ | ○ | ○ | ○ | ○ | ○ | △ |
| | | ○ | ○ | ○ | ○ | ○ | ○ | △ |

Table 13

| | | | CE1 | CE2 | CE3 | CE4 | CE5 | CE6 |
|---|---|---|---|---|---|---|---|---|
| 95°C TD% | | | 77 | 78 | 70 | 78 | 76 | 77 |
| 70°C TD% | | | 34 | 36 | 49 | 46 | 55 | 43 |
| 65°C TD% | Before aging | | 8 | 10 | 42 | 25 | 32 | 22 |
| | After aging | | 0 | 1 | 39 | 6 | 18 | 1 |
| 65°CΔTD% | | | 8 | 9 | 3 | 19 | 14 | 21 |
| Initial time of shrinkage at 65°C (sec) | | | 14.8 | 15.2 | 4.6 | 7.3 | 5.9 | 10.4 |
| Time of maximum shrinkage stress at 65°C (sec) | | | 34.1 | 33.7 | 12.2 | 16.8 | 14.0 | 21.6 |
| MD elongation at break (%) | Before aging | | 521 | 462 | 289 | 434 | 380 | 541 |
| | After aging | | 504 | 418 | 230 | 428 | 373 | 500 |
| Haze (%) | | | 2.8 | 2.3 | 2.5 | 1.9 | 5.0 | 2.3 |
| Appearance evaluation | Before aging | | X | X | ○ | ○ | ○ | ○ |
| | After aging | | X | X | ○ | △ | △ | △ |
| Looseness evaluation | Before aging | | X | X | ○ | ○ | ○ | X |
| | After aging | | X | X | ○ | X | X | X |

Table 14

| | | CE7 | CE8 | CE9 | CE10 | CE11 |
|---|---|---|---|---|---|---|
| 95°C TD% | | 65 | 77 | 67 | 73 | 31 |
| 70°C TD% | | 53 | 44 | 42 | 52 | 5 |
| 65°C TD% | Before aging | 32 | 24 | 19 | 28 | 2 |
| | After aging | 17 | 5 | 2 | 15 | 0 |
| 65°CΔTD% | | 15 | 19 | 17 | 13 | 2 |
| Initial time of shrinkage at 65°C (sec) | | 8.0 | 11.1 | 9.7 | 12.6 | 20.8 |
| Time of maximum shrinkage stress at 65°C | | 14.9 | 22.0 | 25.3 | 26.1 | >60 |
| MD elongation at break (%) | Before aging | 484 | 455 | 427 | 498 | 258 |
| | After aging | 452 | 422 | 364 | 497 | 206 |
| Haze (%) | | 2.9 | 2.4 | 3.0 | 3.2 | 2.3 |
| Appearance evaluation | Before aging | ○ | ○ | △ | ○ | X |
| | After aging | △ | △ | X | △ | X |
| Looseness evaluation | Before aging | X | X | X | △ | X |
| | After aging | X | X | X | X | X |

Results:

It can be seen from Tables 11 to 14 that the heat-shrinkable polyester film of each of EX1 to EX13 (which included the chain hydrocarbon dicarboxylic acid compound in an amount ranging from 0.1 mol% to 8 mol% and the branched alkyl diol in an amount not lower than 15 mol%) exhibited a 65°C TD% of not lower than 25%, had a good heat shrinkage rate after aging, and was not liable to loosen.

Moreover, the heat-shrinkable polyester film of each of EX1 to EX13 had a MD elongation at break of not lower than 300% determined before and after the aging, indicating that the heat-shrinkable polyester film of the present disclosure has excellent processability and hence can be subjected to processing steps that require an external force, and is not liable to break.

On the contrary, the heat-shrinkable polyester film of each of CE1, CE2, CE4, CE5, CE6, CE7, CE8, and CE10 contained no chain hydrocarbon dicarboxylic acid compound, and had a poor shrinkage rate after a period of storage time and aging and a significant change in shrinkage rate before and after aging, and thereby causing the problem of serious loosening after aging. Moreover, CE4 corresponded to Example 1 of US 9574047 B2 and CE6 corresponded to Example 1 of JP 3829353 B2, indicating that: the heat-shrinkable polyester films of US 9574047 B2 and JP 3829353 B2 have poor shrinkage ability after aging, and thereby causing the problem of insufficient thermal shrinkage and loosening after aging. Furthermore, CE10 included terephthalic acid, 4.3 mol% of 1,4-butanediol, and 3.8 mol% of ε-caprolactone (corresponding to US 10336871 B2), indicating that: the heat-shrinkable polyester film of US 10336871 B2 has poor shrinkage ability after aging, and thereby causing the problem of insufficient thermal shrinkage and loosening after aging.

In addition, the heat-shrinkable polyester film of each of CE3 and CE11 included the chain hydrocarbon dicarboxylic acid compound in an amount greater than 8 mol%, resulting in the MD elongation at break before and after the aging lower than 300%, and therefore had poor processability. In particular, the heat-shrinkable polyester film of CE11 included terephthalic acid and 14 mol% of 1,10-decanedicarboxylic acid (corresponding to Example 2 of US 5070180 A), and therefore had poor processability and had a poor heat shrinkage rate after immersion in hot water at 65°C for 10 seconds. The heat-shrinkable polyester film of CE11 had a heat shrinkage rate of 0% after aging and had no shrinkage ability.

The annealing temperature for preparing the heat-shrinkable polyester film of CE9 was too high, and therefore the heat-shrinkable polyester film of CE9 had a poor shrinkage rate after a period of storage time and aging and a significant change in shrinkage rate before and after aging, and thereby causing the problem of serious loosening after aging.

Summarizing the above test results, it is clear that the heat-shrinkable polyester film of the present disclosure has excellent adhesion, and therefore it is not liable to loosen when applied to a container before or after aging. Moreover, the heat-shrinkable polyester film of the present disclosure has excellent elongation at break, and hence can improve processability.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

**Claims**

1. A heat-shrinkable polyester film comprising at least one polyester material made of at least one polyester forming composition which includes a dibasic carboxylic mixture and a diol mixture, the heat-shrinkable polyester film having a heat shrinkage rate of not lower than 25% in a shrinkage direction, which is measured by immersing the heat-shrinkable polyester film in hot water at 65°C for 10 seconds,

    wherein the dibasic carboxylic mixture includes a dibasic carboxylic compound and a chain hydrocarbon dicarboxylic acid compound, the dibasic carboxylic compound being selected from the group consisting of terephthalic acid and dimethyl terephthalate, and the chain hydrocarbon dicarboxylic acid compound being present in an amount ranging from 0.1 mol% to 8 mol%, based on the total molar amount of the dibasic carboxylic mixture; and wherein the diol mixture includes ethylene glycol and a diol component which has at least one of a chain hydrocarbon group and a chain hydrocarbon oxy group and is free from ethylene glycol, the diol component being present in an amount not lower than 15 mol%, based on the total molar amount of the diol mixture.

2. The heat-shrinkable polyester film according to Claim 1, wherein the chain hydrocarbon dicarboxylic acid compound is present in an amount greater than 1 mol% and lower than 5 mol%, based on the total molar amount of the dibasic carboxylic mixture.

3.  The heat-shrinkable polyester film according to Claim 1 or 2, wherein the chain hydrocarbon dicarboxylic acid compound is selected from the group consisting of a linear hydrocarbon dicarboxylic acid compound, a branched hydrocarbon dicarboxylic acid compound, and a combination thereof.

4.  The heat-shrinkable polyester film according to Claim 3, wherein the linear hydrocarbon dicarboxylic acid compound is selected from the group consisting of succinic acid, adipic acid, azelaic acid, and combinations thereof.

5.  The heat-shrinkable polyester film according to any one of Claims 1 to 4, wherein the diol component group includes a branched alkyl diol having a main chain with a number of carbon atoms not greater than 5 and at least one branched chain with a number of carbon atoms not greater than 4, and the branched alkyl diol is present in an amount not lower than 15 mol%, based on the total molar amount of the diol mixture.

6.  The heat-shrinkable polyester film according to Claim 5, wherein the branched alkyl diol is selected from the group consisting of neopentyl glycol, 2-methyl-1,3-propanediol, 2-butyl-2-ethyl-1,3-propanediol, 2,2-diethyl-1,3-propanediol, 2-methyl-2-propyl-1,3-propanediol, 2,2-di-n-butyl-1,3-propanediol, 2-methyl-1,4-butanediol, 3-methyl-1,5-pentanediol, 2,4-diethyl-1,5-pentanediol, and combinations thereof.

7.  The heat-shrinkable polyester film according to Claim 6, wherein the branched alkyl diol is selected from the group consisting of neopentyl glycol, 2-methyl-1,3-propanediol, 2-butyl-2-ethyl-1,3-propanediol, and combinations thereof.

8.  The heat-shrinkable polyester film according to Claim 5, wherein the diol component further includes a diol having a linear hydrocarbon group or a linear hydrocarbon oxy group.

9.  The heat-shrinkable polyester film according to Claim 8, wherein the diol is selected from the group consisting of 1,3-propanediol, 1,4-butanediol, 1,5-pentanediol, 1,6-hexanediol, diethylene glycol, triethylene glycol, polyether polyol, and combinations thereof.

10. The heat-shrinkable polyester film according to any one of Claims 1 to 9, having a heat shrinkage rate of not lower than 40% in the shrinkage direction, which is measured by immersing the heat-shrinkable polyester film in hot water at a temperature ranging from 70°C to 100°C for 10 seconds.

11. The heat-shrinkable polyester film according to any one of Claims 1 to 10, having a heat shrinkage rate of not lower than 68% in the shrinkage direction, which is measured by immersing the heat-shrinkable polyester film in hot water at a temperature ranging from 90°C to 100°C for 10 seconds.

12. The heat-shrinkable polyester film according to any one of Claims 1 to 11, having an absolute value of difference between a heat shrinkage rate in the shrinkage direction before aging and a heat shrinkage rate in the shrinkage direction after aging, which is not greater than 10%, wherein the heat shrinkage rate in the shrinkage direction before the aging is measured after immersing in hot water at 65°C for 10 seconds, and the heat shrinkage rate in the shrinkage direction after the aging is measured after placing at 30°C and a relative humidity of 85% for 3 months, followed by immersing in hot water at 65°C for 10 seconds.

13. The heat-shrinkable polyester film according to Claim 12, having an elongation at break of not lower than 300% in the shrinkage direction determined before and after aging.

14. A method for producing a heat-shrinkable polyester film, comprising:

    (a) providing a polyester material made of a polyester forming composition including a dibasic carboxylic mixture and a diol mixture, wherein the dibasic carboxylic mixture includes a dibasic carboxylic compound and a chain hydrocarbon dicarboxylic acid compound, the dibasic carboxylic compound being selected from the group consisting of terephthalic acid and dimethyl terephthalate, and the chain hydrocarbon dicarboxylic acid compound being present in an amount ranging from 0.1 mol% to 8 mol%, based on the total molar amount of the dibasic carboxylic mixture; and
    wherein the diol mixture includes ethylene glycol and a diol component which has at least one of a chain hydrocarbon group and a chain hydrocarbon oxy group and is free from ethylene glycol, the diol component being present in an amount not lower than 15 mol%, based on the total molar amount of the diol mixture;
    (b) subjecting the polyester material to drying, a melting treatment, and an extruding treatment in sequence, so as to obtain a sheet; and

(c) subjecting the sheet to a preheating treatment, a stretching treatment, and an annealing treatment in sequence, so as to obtain the heat-shrinkable polyester film, the annealing treatment being conduted at a glass transition temperature of the sheet -15°C to the glass transition temperature of the sheet +8°C.

15. The method according to Claim 14, wherein the chain hydrocarbon dicarboxylic acid compound is present in an amount greater than 1 mol% and lower than 5 mol%, based on the total molar amount of the dibasic carboxylic mixture.

16. The method according to Claim 14 or 15, wherein the chain hydrocarbon dicarboxylic acid compound is selected from the group consisting of a linear hydrocarbon dicarboxylic acid compound, a branched hydrocarbon dicarboxylic acid compound, and a combination thereof.

17. The method according to Claim 16, wherein the linear hydrocarbon dicarboxylic acid compound is selected from the group consisting of succinic acid, adipic acid, azelaic acid, and combinations thereof.

18. The method according to any one of Claims 14 to 17, wherein the diol component includes a branched alkyl diol having a main chain with a number of carbon atoms not greater than 5 and at least one branched chain with a number of carbon atoms not greater than 4, and the branched alkyl diol is present in an amount not lower than 15 mol%, based on the total molar amount of the diol mixture.

19. The method according to Claim 18, wherein the branched alkyl diol is selected from the group consisting of neopentyl glycol, 2-methyl-1,3-propanediol, 2-butyl-2-ethyl-1,3-propanediol, 2,2-diethyl-1,3-propanediol, 2-methyl-2-propyl-1,3-propanediol, 2,2-di-n-butyl-1,3-propanediol, 2-methyl-1,4-butanediol, 3-methyl-1,5-pentanediol, 2,4-diethyl-1,5-pentanediol, and combinations thereof.

20. The method according to Claim 19, wherein the branched alkyl diol is selected from the group consisting of neopentyl glycol, 2-methyl-1,3-propanediol, 2-butyl-2-ethyl-1,3-propanediol, and combinations thereof.

21. The method according to Claim 18, wherein the diol component further includes a diol having a linear hydrocarbon group or a linear hydrocarbon oxy group.

22. The method according to Claim 21, wherein the diol is selected from the group consisting of 1,3-propanediol, 1,4-butanediol, 1,5-pentanediol, 1,6-hexanediol, diethylene glycol, triethylene glycol, polyether polyol, and combinations thereof.

23. The method according to any one of Claims 14 to 22, wherein in step (b), the melting treatment is conducted at a temperature ranging from 210°C to 260°C.

24. The method according to any one of Claims 14 to 23, wherein in step (c), the stretching treatment is conducted by stretching the sheet in a machine direction or a direction transverse to the machine direction.

Europäisches
Patentamt
European
Patent Office
Office européen
des brevets

## EUROPEAN SEARCH REPORT

Application Number

EP 22 18 6256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 617 247 A1 (TOYO BOSEKI [JP]) 4 March 2020 (2020-03-04) * paragraphs [0001], [0018], [0024], [0034], [0049], [0057] - [0060], [0062] - [0064], [0083] - [0085], [0087], [0091], [0092]; claims 1-4; table 2 * ----- | 1-24 | INV. C08G63/183 C08G63/78 C08G63/88 C08J5/18 |
| Y | EP 1 491 577 B1 (TORAY SAEHAN INC [KR]) 1 April 2009 (2009-04-01) * paragraphs [0001], [0011], [0012], [0017], [0020], [0028], [0033] - [0036]; claims 1,3; table 1 * ----- | 1-24 | |
| Y | US 9 080 027 B2 (HARUTA MASAYUKI [JP]; MUKOYAMA YUKINOBU [JP]; TOYO BOSEKI [JP]) 14 July 2015 (2015-07-14) * columns 1,4,9,12; claims 1,3,10,17; examples 1,3,4; table 3 * ----- | 14-24 | |
| Y | EP 1 692 217 B1 (EASTMAN CHEM CO [US]) 19 May 2010 (2010-05-19) * paragraphs [0001], [0077]; claims 1,2,5,25-28 * ----- | 14-24 | TECHNICAL FIELDS SEARCHED (IPC) C08G C09J C08J |

The present search report has been drawn up for all claims

| Place of search | Date of completion of the search | Examiner |
|---|---|---|
| The Hague | 22 September 2022 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 122 970 A1

## ANNEX TO THE EUROPEAN SEARCH REPORT
## ON EUROPEAN PATENT APPLICATION NO.

EP 22 18 6256

22-09-2022

| Patent document cited in search report | | | Publication date | Patent family member(s) | | Publication date |
|---|---|---|---|---|---|---|
| EP 3617247 | A1 | | 04-03-2020 | CN 110546185 A | | 06-12-2019 |
| | | | | EP 3617247 A1 | | 04-03-2020 |
| | | | | JP 6607473 B2 | | 20-11-2019 |
| | | | | JP WO2018198845 A1 | | 27-06-2019 |
| | | | | KR 20190137148 A | | 10-12-2019 |
| | | | | TW 201900720 A | | 01-01-2019 |
| | | | | US 2021108027 A1 | | 15-04-2021 |
| | | | | WO 2018198845 A1 | | 01-11-2018 |
| EP 1491577 | B1 | | 01-04-2009 | EP 1491577 A1 | | 29-12-2004 |
| | | | | JP 2005015801 A | | 20-01-2005 |
| | | | | KR 20050000849 A | | 06-01-2005 |
| | | | | US 2005048301 A1 | | 03-03-2005 |
| US 9080027 | B2 | | 14-07-2015 | CN 102822248 A | | 12-12-2012 |
| | | | | EP 2548913 A1 | | 23-01-2013 |
| | | | | JP 5664548 B2 | | 04-02-2015 |
| | | | | JP WO2011114934 A1 | | 27-06-2013 |
| | | | | KR 20130031242 A | | 28-03-2013 |
| | | | | TW 201139508 A | | 16-11-2011 |
| | | | | US 2013008821 A1 | | 10-01-2013 |
| | | | | WO 2011114934 A1 | | 22-09-2011 |
| EP 1692217 | B1 | | 19-05-2010 | AT 434646 T | | 15-07-2009 |
| | | | | AT 468368 T | | 15-06-2010 |
| | | | | EP 1692217 A1 | | 23-08-2006 |
| | | | | EP 1692226 A1 | | 23-08-2006 |
| | | | | JP 4745981 B2 | | 10-08-2011 |
| | | | | JP 2007513241 A | | 24-05-2007 |
| | | | | JP 2007517924 A | | 05-07-2007 |
| | | | | KR 20060117962 A | | 17-11-2006 |
| | | | | KR 20060122881 A | | 30-11-2006 |
| | | | | PL 1692217 T3 | | 31-08-2010 |
| | | | | WO 2005061596 A1 | | 07-07-2005 |
| | | | | WO 2005061628 A1 | | 07-07-2005 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9574047 B2
- US 5070180 A
- JP 3829353 B

- CN 112679709 A
- US 10336871 B2
- TW 202110970 A

**Non-patent literature cited in the description**

- *ASTM D4603,* 2003